# EUROPÄISCHE PATENTANMELDUNG

(11) **EP 1 462 187 A2**
(43) Veröffentlichungstag der Anmeldung: **29.09.2004**
(21) Anmeldenummer: 04090078.9
(22) Anmeldetag: 02.03.2004
(51) Int. Cl.: B09C 1/00, C02F 1/28

(54) **Verfahren zur in-situ Dekontamination schadstoffbelasteter Aquifere**

(30) Priorität: 07.03.2003 DE 10311094; 27.03.2003 DE 10314489
(71) Anmelder: UFZ-UMWELTFORSCHUNGSZENTRUM LEIPZIG-HALLE GMBH, 04318 Leipzig (DE)
(72) Erfinder: Kopinke, Frank-Dieter, Prof. Dr., 04129 Leipzig (DE); Woszidlo, Silke, 04277 Leipzig (DE); Georgi, Anett, Dr., 04289 Leipzig (DE)
(74) Vertreter: Rasch, Dorit

(57) **Zusammenfassung**

Die Erfindung betrifft ein Verfahren zur in-situ Dekontamination von mit organischen Schadstoffen belasteten Aquiferen unter Errichtung einer permeablen Barriere aus Aktivkohle in einem kontaminierten Aquifer mittels Einspülen von Aktivkohlepartikeln und gesteuerter Immobilisierung im Aquifer. Erfindungsgemäß werden Aktivkohlepartikel mit einer definierten Korngrößenverteilung < 10 µm in einer Suspension geringer Ionenstärke < 10⁻³ mol/l eingesetzt.

## Beschreibung

Die Erfindung betrifft ein Verfahren zur in-situ Dekontamination von mit organischen Schadstoffen belasteten Aquiferen unter Errichtung einer permeablen Barriere aus Aktivkohle in einem kontaminierten Aquifer mittels Einspülen von Aktivkohleteilchen und gesteuerter Immobilisierung im Aquifer. Erfindungsgemäß werden Aktivkohleteilchen mit definierter Korngröße < 10 µm fein verteilt in einer Suspension geringer Ionenstärke eingesetzt.

Bei der Behandlung von flächenhaften Grundwasserkontaminationen ist oftmals eine Sanierung der Schadensquelle aus geologischen, technischen oder Kostengründen nicht möglich. Deshalb besitzen Maßnahmen zur Fahnenbegrenzung eine hohe technische Relevanz. Stand der Technik zur Reinigung kontaminierter Grundwässer sind sogenannte Pump-and-Treat-Verfahren, bei denen das Grundwasser übertage gefördert und dort behandelt wird. Auf Grund der langen Sanierungszeiträume von vielen Jahren verursachen Pump-and-Treat-Verfahren hohe Betriebs-, insbesondere hohe Energiekosten.

Aus diesem Grund streben neuere Konzepte eine in-situ-Behandlung des Grundwassers im Aquifer an. Geochemische Barrieren aus reaktiven Materialien sind bekannt. Stand der Technik sind das Konzept der permeablen reaktiven Wände und das Funnel-and-Gate-Konzept [Grundwasser 1996, 1, 1-20: In-situ Reaktionswände - ein neuer Ansatz zur passiven Sanierung von Boden- und Grundwasserverunreinigungen; Starr, R.C.; Cherry, J.A. 1994: In-situ Remediation of Contaminated Groundwater: The Funnel-and-Gate System, Ground Water, 32, 465-476]. Hierbei werden in entsprechenden Bauwerken Adsorbenzien bzw. Reagenzien in situ in den Abstrom von Schadensherden eingebracht. Die Anlagen sind so konzipiert, dass eine Abreinigung durch Reaktion oder Immobilisierung der Schadstoffe ohne externe Energiezufuhr langfristig gewährleistet wird. Bisher haben sich als aktive Komponenten in der durchströmten Wand bzw. im Gate-Reaktor insbesondere Aktivkohle als Adsorber für organische Schadstoffe sowie Fe(0) als Reduktionsmittel für Chlorkohlenwasserstoffe (CKW) bewährt. Die Errichtung von reaktiven Wänden bzw. Funnel-and-Gate-Anlagen erfordert allerdings umfangreiche bauliche Maßnahmen, die umso kostenintensiver sind, je tiefer der zu reinigende Grundwasserleiter liegt.

Bei den herkömmlichen permeablen reaktiven Wänden wird das Adsorbens oder Reaktionsmittel in einer kompakten Schüttung eingebracht, deren Ausdehnung in Grundwasserfließrichtung meist deutlich weniger als 1 m beträgt. Bekannt ist auch der Aufbau von In-situ-Barrieren unter Verwendung einspülbarer Reagenzien im Porenraum des Aquifers. Dabei ist jedoch zu beachten, dass die hydraulische Leitfähigkeit der Behandlungszone gegenüber dem nativen Aquifermaterial nicht oder nur geringfügig erhöht wird, um ein Umströmen zu verhindern. Die Menge an reaktivem Material, die in einem bestimmten Volumenelement des Aquifers eingebracht werden kann,- ist deshalb begrenzt und von den Eigenschaften des zu behandelnden Aquifers abhängig.

Neue Ansätze zur Nutzung von kolloidalen Materialien bei der Grundwasserreinigung bestehen in der Anwendung von kolloidalem Eisen bzw. bimetallischen Kolloiden (z.B. Palladium auf Eisen). Elliot, D.W. und Zhang, W.-X. (2001: Field Assessment of Nanoscale Bimetallic Particles for Groundwater Treatment, Environ. Sci. Technol. 35, 4922-4926) beschreiben die Injektion von Palladium-Eisen-Kolloiden mit einer engen Partikelgrößenverteilung im Bereich von 100 - 200 nm in einen Aquifer und deren Wirkung für den Abbau von Trichlorethen.

Die Anwendung von Eisen bzw. bimetallischen eisenhaltigen Kolloiden ist jedoch auf solche Schadstoffe begrenzt, die durch Reduktionsreaktionen in weniger gefährliche Verbindungen überführt werden können. Hierzu zählen verschiedene aliphatische CKW sowie oxidierte Spezies von Metallen, die edler als Eisen sind.

Das wohl bekannteste Adsorptionsmittel, die Aktivkohle, wird aufgrund seiner ausgezeichneten Adsorptionseigenschaften gegenüber einem breiten Spektrum an organischen Stoffen in großem Umfang zur Wasserreinigung genutzt. Ihre katalytische Wirkung bei der Hydrolyse organischer Verbindungen in wässriger Phase bei erhöhten Temperaturen (bis 100°C) ist bekannt [Budinova, T.; Razvigorova, M.; Petrov, N.; Minkova, V.; Taranjiska, R. 1998: Catalytic hydrolysis of soya-oil with carbon adsorbents, Carbon 36, 899-901].

Im Fall der oben beschriebenen bimetallischen Kolloide wurde als Werkzeug zur Steuerung der Kolloidmobilität im Aquifer die Größe der Partikel eingesetzt. Bedingt durch den Herstellungsprozess der Kolloide ergibt sich ein eng begrenzter Partikelgrößenbereich von 100 - 200 nm. Für Aktivkohle ist die Herstellung von Fraktionen mit einer solch engen und kleinen Partikelgrößenverteilung jedoch als sehr aufwendig einzuschätzen.

Aus US 46 64 809 A ist ein Verfahren zur Behandlung kontaminierter Grundwässer bekannt, wonach wässrige Suspensionen von Aktivkohle unter Zusatz von Stabilisatoren, z.B. anionische Tenside, in einen Aquifer gepumpt werden. Die Partikel sollten sehr klein sein, wobei eine totale oder teilweise Verstopfung erwünscht ist. In DE 198 08 135 A1 ist ebenfalls ein Verfahren zur Errichtung einer in-situ-Schadstoffbarriere beschrieben, wonach eine wässrige anionische Tensidlösung im Grundwasserleiter verteilt wird, die dann durch Reaktion mit vorhandenen oder injizierten mehrwertigen Kationen ausfällt. Diese Barriere kann durch zusätzliche, in der Tensidlösung enthaltene, adsorptiv wirkende Stoffe, wie feinverteilte Aktivkohle und Huminate angereichert werden.

Wünschenswert ist jedoch, zur Grundwasserdekontamination den Aufbau einer permeablen Barriere in einem Aquifer durch Einspülen vielseitiger und umweltfreundlicher Adsorbentien oder Reaktionsmittel ohne chemische Zusätze zu erreichen. Voraussetzung hierfür ist, dass das Adsorbens oder Reaktionsmittel in eine lösliche bzw. einspülbare Form überführbar ist und anschließend im Aquifer gezielt immobilisiert werden kann.

Der Erfindung lag deshalb die Aufgabe zugrunde, immobilisierbare Adsorptionsmaterialien zu finden und so bereitzustellen, dass sie naturnah sind und kostengünstig in Aquifere eingebracht werden können. Desweiteren besteht die Aufgabe darin, eine Immobilisierung der Materialien im Aquifer zu steuern und zu kontrollieren, so dass sie langzeitwirksam effektiv eine in-situ Reinigung garantieren und den Aquifer nicht verstopfen.

Überraschend wurde gefunden, dass eine wässrige Aktivkohlesuspension ohne Zusatz weiterer Chemikalien, allein durch Absenkung der Ionenstärke des Wassers stabil gehalten werden kann, so dass eine Injektion in einen Aquifer mit einer ausreichenden Laufstrecke möglich ist. Die Vermeidung von Chemikalien ist eine wesentliche Voraussetzung, dass das Adsorptionsmaterial ohne Bedenken zur Grundwasserreinigung und -sanierung eingesetzt werden kann.

Das Verfahren zur Dekontamination von mit organischen Schadstoffen belasteten Grundwässern in-situ im Aquifer ist dadurch gekennzeichnet, dass eine wässrige Suspension geringer Ionenstärke, die Aktivkohleteilchen mit Korngrößen < 10 µm umfasst, in den Aquifer eingespült wird. Das Einspülen der Aktivkohleteilchen erfolgt in der Regel in Wasser mit einer Ionenstärke < 10⁻³ mol/1, vorzugsweise in deionisiertem Wasser.

Überraschend begünstigt bereits das Ionen-arme Wasser unter Weglassen von zusätzlichen chemischen Mitteln eine Stabilisierung der einzuspeisenden Aktivkohlesuspension, wobei durch Vermischen mit natürlichem Grundwasser im Aquifer diese Stabilisierung wieder aufgehoben wird und die Immobilisierung der Aktivkohlepartikel erfolgt.

Erfindungsgemäß wird die Aktivkohle in der Suspension mit einer bevorzugten Korngröße von ≤ 5 µm, verwendet. In einer bevorzugten Ausführungsvariante werden Aktivkohleteilchen mit Korngrößen im Bereich von 0,1 bis 5 µm, besonders bevorzugt im Bereich von 0,5 bis 5 µm eingesetzt.
Durch den Einsatz der Aktivkohle fein verteilt in Form einer wässrigen Suspension, die die Aktivkohle breitgefächert vorzugsweise in Korngrößen von mitteldispers (0,5-2 µm) bis grobdispers (bis 10 µm) aufweist, kann die Bildung einer permeablen Barriere erreicht und somit eine Aquiferverstopfung vermieden werden.

In einer Ausführungsvariante werden die Aktivkohlepartikel so bereitgestellt, dass sie eine negative Nettooberflächenladung besitzen. Dazu wird durch Zugabe von Lauge oder Säure der pH-Wert der Suspension auf einen Bereich von pH = 5 - 9 eingestellt. Besonders bevorzugt werden Aktivkohlechargen mit Korngrößen im Bereich von 0,5 bis 5 µm verwendet, die in wässriger Lösung bei annähernd neutralem pH-Wert (pH = 6,5 - 7,5) negative Nettooberflächenladungen aufweisen. Bevorzugte Aktivkohlekonzentrationen liegen im Bereich von 1 g/l bis 10 g/l.

Aufgrund der natürlichen Dispersion in Aquiferen kommt es zur Vermischung der eingespülten Aktivkohlesuspension mit Grundwasser. Grundwasser besitzt im Allgemeinen eine relativ hohe Fracht an gelösten Salzen. Damit erfolgt im Zuge der Vermischung der eingespülten Aktivkohlesuspension mit Grundwasser eine effektive Immobilisierung der Aktivkohle auf dem Aquifermaterial. Die Immobilisierung der Aktivkohle ist unter praktisch relevanten Aquiferbedingungen irreversibel. Insbesondere durch Einspeisung variabler Mengen von Wasser geringer Ionenstärke (< 10⁻³ mol/l) bzw. von deionisiertem Wasser in den Aquifer vor und nach der eigentlichen Suspensionsinjektion kann der Immobilisierungsbereich im Aquifer gesteuert werden. Größere Mengen an injiziertem deionisiertem Wasser führen zu einer langsameren Vermischung zwischen Injektat und Grundwasser und somit zu einer längeren Transportstrecke und umgekehrt.

In Abhängigkeit von der Fließgeschwindigkeit des Grundwassers werden die Mengen und Flüsse an deionisiertem Wasser festgelegt, um eine kontrollierte Sedimentation in gewünschten Regionen zu erzielen. Durch diese Maßnahmen und die Auswahl der Partikelgrößen bis zu 10 µm, vorzugsweise zwischen 0,5 bis 5 µm, kann eine schnelle Sedimentation der Aktivkohle in der unmittelbaren Umgebung des Injektionspunktes vermieden werden.

Eine Alternative zur Steuerung der Aktivkohle-Immobilisierung durch Variation der Ionenstärke besteht in der Variation des pH-Wertes. In alkalischem Milieu ist die Suspension mobiler als in neutralem Milieu. Wird eine alkalische Suspension injiziert, wird der pH-Wert mit zunehmendem Abstand vom Injektionsbrunnen durch die natürliche Pufferkapazität des Aquifers verringert, bis die Aktivkohleteilchen schließlich immobilisiert werden.

Durch die steuerbare Immobilisierung kann eine effektive, kostengünstige permeable Barriere in den kontaminierten Aquiferen errichtet werden, die eine Schadstoffbeseitigung durch Sorption gewährleistet und zusätzlich katalytische Wirkungen beim chemischen Abbau der Schadstoffe ausüben kann.

Anhand von Laborversuchen konnte gezeigt werden, dass die Mobilität von Aktivkohlepartikel in Sandsäulen unter Verwendung von Leitungswasser als Fließmittel drastisch geringer ist, als bei Verwendung von deionisiertem Wasser. In der Regel liegt die Ionenstärke der meisten Grundwässer höher als die des verwendeten Leitungswassers.

Mit der erfindungsgemäßen permeablen in-situ-Barriere entsteht eine Behandlungszone, die eine Ausdehnung in Grundwasserfließrichtung von mehreren Metern aufweisen kann und in der das Adsorbens fein verteilt in geringer Konzentration vorliegt. Das gewählte Adsorbens weist durch Wahl des Partikelgrößenbereiches und geringe Ionenstärke des Wassers eine ausreichende Mobilität im Aquifer auf, um ausgehend vom Injektionsort die Verteilung über die vorgesehene Behandlungszone in Grundwasserfließrichtung zu gewährleisten. Gleichzeitig tritt innerhalb einer bestimmten Transportstrecke eine Immobilisierung an den Porenwänden bzw. auf den Sedimentkörnern des Aquifers ein. An dieser permeablen in-situ Barriere werden die Schadstoffe ab- bzw. adsorbiert. Diese Barriere verhindert bzw. verlangsamt einen Durchtritt der Schadstoffe.

Das Verfahren bewirkt eine ausreichende Reinigung des Grundwassers durch Abtrennung organischer Schadstoffe. Andere Dekontaminationsverfahren können in der Regel entfallen.

Die weiteren Vorteile der Erfindung, eine permeable Barriere durch Injizieren von Aktivkohleteilchen in-situ in den Aquifer zu errichten, bestehen darin, dass
- die Kosten für die Errichtung von unterirdischen Bauwerken eingespart werden können,
- unzugängliche Stellen im Aquifer erreicht werden können, an denen z.B. durch Überbauung keine Möglichkeit zur Errichtung der baulichen Strukturen (z.B. Spund-, Schlitz- oder Bohrpfahlwände) besteht, die für die Anwendung der herkömmlichen Methoden notwendig sind,
- keine Einschränkungen in der Nutzbarkeit der zu sanierenden Flächen bestehen,
- die Aktivkohle mit dem bevorzugten Grundwasserfluss transportiert wird und damit genau in jenen Aquiferbereichen immobilisiert werden kann, in denen auch die Schadstoffe bevorzugt transportiert werden.

Das erfindungsgemäße Verfahren wird im Folgenden anhand von einigen Beispielen näher erläutert auf die sie jedoch nicht beschränkt werden soll.

### Ausführungsbeispiele

Es werden die Änderung der Mobilität der Aktivkohle in sandigem Boden bei Variation der Ionenstärke bzw. des pH-Werts des Fließmittels, sowie die Wirksamkeit immobilisierter Aktivkohle als Adsorber und Katalysator gezeigt.

### Beispiel 1:

Es wurde ein Säulenversuch mit einer sandgefüllten Glassäule (Länge = 18 cm, Innendurchmesser = 1 cm) durchgeführt. Bei dem Sand handelt es sich um eine vorgewaschene und ausgesiebte Fraktion (Siebfraktion: 0,6 - 1mm) eines sandig kiesigen Aquifers. Die verwendete Aktivkohle wurde durch Mahlen einer handelsüblichen, gekörnten Aktivkohle hergestellt. Die gemahlene Kohle wurde in deionisiertem Wasser suspendiert. Durch Zentrifugation wurden Partikel mit einer Korngröße von < 5 µm abgetrennt. Das Zentrifugat wurde durch Verdünnen mit deionisiertem Wasser auf die vorgesehene Aktivkohlekonzentration gebracht. Die Korngrößenverteilung der Aktivkohle in den für die Säulenversuche verwendeten Suspensionen lag im Bereich von 0,1 - 5 µm.

Die sandgefüllte Säule wurde von unten nach oben mit Leitungswasser (Leitfähigkeit = 350 µS/cm) als Fließmittel durchspült (Flußrate = 4 ml/min). Über einen Injektionsport wurde eine Kanüle in einer Höhe von ca. 1 cm in die Sandpackung mittig eingeführt. Über diese Kanüle wurden 5 ml der oben beschriebenen Aktivkohlesuspension (Konzentration der Aktivkohle = 1 g/l) mit einer Flußrate von 1ml/min in den Fließmittelstrom zudosiert. Nach Beendigung der Aktivkohleeinspülung wurde mit einem Fließmittelvolumen von 10 Porenvolumina nachgespült. Der Ablauf der Säule wurde in Fraktionen gesammelt, die mit Hilfe eines TOC-Analysators auf ihren Aktivkohlegehalt untersucht wurden. Um die in der Sandpackung immobilisierte Aktivkohlemenge zu bestimmen, wurde die Packung aus der Säule entfernt und in deionisiertem Wasser suspendiert. Durch Anwendung von Ultraschall wurden die Aktivkohlekolloide remobilisiert, so dass sie mit der Wasserphase von der Sandfraktion abgetrennt werden konnten. Die Bestimmung des Aktivkohlegehaltes in dieser Suspension erfolgte wiederum mit dem TOC-Analysator. Der auf der Sandpackung verbliebene Anteil der Aktivkohle betrug 55 Ma% der aufgegebenen Aktivkohlemenge. Die im Ablauf der Säule enthaltene Aktivkohlemenge entsprach 45 Ma% der aufgegebenen Aktivkohlemenge.

### Beispiel 2:

In einem zweiten Experiment wurde der gleiche Versuchsaufbau wie in Beispiel 1 verwendet. Das Fließmittel bestand in diesem Fall jedoch nicht aus Leitungswasser, sondern aus deionisiertem Wasser. Die Zusammensetzung und Aufgabe der Aktivkohlesuspension entsprach den Angaben in Beispiel 1. Der auf der Sandpackung verbliebene Anteil der Aktivkohle betrug 5 Ma% der aufgegebenen Aktivkohlemenge. Im Ablauf der Säule wurden 95 Ma% der aufgegebenen Aktivkohlemenge wiedergefunden. Ein Vergleich mit den Ergebnissen aus Beispiel 1 zeigt, dass die Mobilität der Aktivkohle in der Sandschüttung unter Verwendung von deionisiertem Wasser als Fließmittel im Vergleich zu Leitungswasser drastisch erhöht wird.

### Beispiel 3:

Eine mit ungewaschenem Aquifermaterial aus einem sandig kiesigen Aquifer gefüllte Glassäule (1 = 50 cm, Innendurchmesser = 2 cm) wurde von unten nach oben mit Leitungswasser durchspült. Nach Durchsatz von 20 Porenvolumina Leitungswasser wurde eine Aktivkohlesuspension eingespült. Hierfür wurde eine Suspension von Aktivkohle (Korngrößenverteilung 0,1 - 5 µm, Konzentration: 1 g/l) in Leitungswasser, das mit NaOH auf pH = 9 eingestellt wurde, eingesetzt. Nach Durchsatz von 2 Porenvolumina der Aktivkohlesuspension wurde am Säulenausgang ein pH-Wert von 7,5 gemessen. Dieser pH-Wert blieb über einen Durchsatz von weiteren 5 Porenvolumina der Aktivkohlesupension annähernd konstant. Anschließend wurde mit 5 Porenvolumina Leitungswasser (pH = 6,9) nachgespült. Die im Ablauf der Säule wiedergefundene Aktivkohlemenge entsprach 45 % der aufgegebenen Menge. Die Packung der Säule wurde in zwei etwa gleich großen Fraktionen aus der Säule entnommen. Anschließend wurde für beide Fraktionen der Gehalt an organischem Kohlenstoff bestimmt. In der ersten Fraktion, die im unteren (dem Säuleneingang zugewandten) Säulenbereich entnommen wurde, war keine Erhöhung des OC-Gehaltes gegenüber dem ursprünglichen OC-Gehalt des Ausgangsmaterials feststellbar. In der zweiten Fraktion, die im oberen (dem Säulenausgang zugewandten) Säulenbereich entnommen wurde, wurde eine Erhöhung des OC-Gehaltes von 0,1 Ma% gegenüber dem ursprünglichen OC-Gehalt des Sandmaterials festgestellt.

### Beispiel 4:

Durch Zudosieren einer Aktivkohlesuspension (5 g/l Aktivkohle in deionisiertem Wasser, Korngrößenverteilung 0,1 - 5 µm) in eine mit Leitungswasser durchspülte Sandsäule (Versuchsaufbau und Sandmaterial entsprechend Beispiel 1) wurde eine Beladung des Sandmaterials mit Aktivkohle von 0,15 Ma% erzeugt.

Anschließend wurde die aktivkohlebeladene Säule auf ihr Retardationsvermögen gegenüber polyzyklischen aromatischen Kohlenwasserstoffen (PAK) untersucht. Hierfür wurde eine Lösung von Naphthalin, Acenaphthen, Phenanthren und Pyren (jeweils 50 µg/l) in Leitungswasser hergestellt und durch die Säule gepumpt. Über. einen Durchsatz von 2000 Porenvolumina wurden keine PAK im Ablauf der Säule gefunden. Im Vergleich dazu erfolgte der Durchbruch von Naphthalin über eine Säule, die mit dem unbehandelten Sandmaterial gefüllt war, bereits nach einem Durchsatz von 1,5 Porenvolumina des oben beschriebenen Modellwassers.

### Beispiel 5:

Für eine entsprechend der in Beispiel 4 beschriebenen Vorgehensweise hergestellte, aktivkohlebeladene Sandsäule wurden die Adsorption und Hydrolyse von Lindan getestet. Hierfür wurde eine Lösung von Lindan [γ-Hexachlorcyclohexan (γ-HCH)] in Leitungswasser mit einer Konzentration von 1·mg/l hergestellt. Der pH-Wert der Lösung wurde mit Phosphatpuffer (0,01 M) auf pH = 8,0 eingestellt. Diese Lösung wurde mit einer Flussrate von 0,2 ml/min durch die Säule gepumpt. Nach einem Durchsatz von ca. 4 l (≅ 900 Porenvolumina) begann der Durchbruch verschiedener CKW. Dabei handelte es sich vorwiegend um isomere Tri- und Dichlorbenzole. In Spuren wurden Lindan und Pentachlorcyclohexen nachgewiesen. Der Durchbruch dieser Verbindungen erfolgte entsprechend ihrer Adsorbierbarkeit an Aktivkohle nach unterschiedlichen Durchsatzvolumina. Nach einem Durchsatz von ca. 8 l war der Durchbruch aller Verbindungen erreicht. Die Konzentrationen der Verbindungen im Ablauf der Säule blieben danach über einen Durchsatz von weiteren 5 l des Modellwassers konstant.

Im Vergleich dazu wurde ein Säulenversuch mit dem unbehandelten Sand durchgeführt. Es wurde wiederum eine Lösung von Lindan in Leitungswasser (pH = 8; 0,01 M Phosphatpuffer) über die Säule gepumpt. Der Durchbruch des Lindans erfolgte nach einem Durchsatz von ca. 1,5 Porenvolumina. Danach wurden weitere 100 Porenvolumina der Lindanlösung durchgesetzt. Dabei entsprach die im Säulenablauf ermittelte Lindankonzentration einem Wert von 100 ± 10% der Konzentration im Zulauf. In Spuren wurde Pentachlorcyclohexen im Ablauf der Säule nachgewiesen (< 0,1% der Lindankonzentration im Zulauf). Bei der Elution über die Säule mit unbehandeltem Sand erfolgten demnach nahezu keine Retardierung und keine Hydrolyse des Lindans.

Das Beispiel zeigt, dass die auf dem Sandmaterial immobilisierte Aktivkohle in der Lage ist, in schwach alkalischem Wasser die Hydrolyse des Lindans zu katalysieren. Der Umsatz des Lindans zu den beschriebenen Produkten (Diund Trichlorbenzole) kann zwar nicht als vollständige Reinigung betrachtet werden, es wird jedoch eine signifikante Verringerung der Toxizität und eine Verbesserung der biologischen Abbaubarkeit erreicht.

## Patentansprüche

1. Verfahren zur in-situ Dekontamination schadstoffbelasteter Wässer unter Errichtung einer permeablen Barriere aus Aktivkohle in einem kontaminierten Aquifer,
**dadurch gekennzeichnet, dass**
die Aktivkohle im Aquifer gesteuert immobilisiert wird, indem Aktivkohlepartikel mit definierten Korngrößen < 10µm in einer wässrigen Suspension geringer Ionenstärke < 10⁻³ mol/l in den Aquifer eingespült werden.

2. Verfahren nach Anspruch 1,
**dadurch gekennzeichnet, dass**
zur Steuerung der Aktivkohle-Immobilisierung im Aquifer variable Mengen von Wasser geringer Ionenstärke in den Aquifer vor und/oder nach der eigentlichen Suspensionsinjektion in den Aquifer eingespeist werden.

3. Verfahren nach Anspruch 1,
**dadurch gekennzeichnet, dass**
zur Steuerung der Aktivkohle-Immobilisierung der pH-Wert variiert wird.

4. Verfahren nach einem der Ansprüche 1 bis 3,
**dadurch gekennzeichnet, dass**
die Aktivkohlepartikel mit einer Korngröße < 5µm in der Suspension vorliegen.

5. Verfahren nach Anspruch 4,
**dadurch gekennzeichnet, dass**
die Aktivkohlepartikel mit einer Korngröße im Bereich 0,1 bis 5 µm, in der Suspension vorliegen.

6. Verfahren nach einem der Ansprüche 1 bis 5,
**dadurch gekennzeichnet, dass**
die wässrige Suspension deionisiert ist.

7. Verfahren nach einem der Ansprüche 1 bis 6,
**dadurch gekennzeichnet, dass**
Aktivkohlepartikel verwendet werden, die eine negative Nettooberflächenladung aufweisen.

8. Verfahren nach Anspruch 7,
**dadurch gekennzeichnet, dass**
die negative Nettooberflächenladung durch Einstellen des pH-Wertes der Suspension innerhalb eines Bereiches von 5 - 9 erzeugt wird, vorzugsweise durch Einstellen eines pH-Wertes von 6,5 - 7,5.

9. Verfahren nach einem der Ansprüche 1 bis 8,
**dadurch gekennzeichnet, dass**
die Aktivkohlekonzentration zwischen 1 g/l bis 10 g/l liegt.
